## Europäisches Patentamt
## European Patent Office
## Office européen des brevets

(11) Numéro de publication: **0 116 803**
**B1**

(12) **FASCICULE DE BREVET EUROPEEN**

(45) Date de publication du fascicule du brevet:
09.04.86

(21) Numéro de dépôt: **83402555.3**

(22) Date de dépôt: **29.12.83**

(51) Int. Cl.⁴: **F 25 B 29/00, F 25 B 15/02**

(54) Procédé de production de froid et/ou de chaleur au moyen d'un cycle à absorption comportant au moins deux étapes d'absorption.

(30) Priorité: **10.01.83 FR 8300370**

(43) Date de publication de la demande:
**29.08.84 Bulletin 84/35**

(45) Mention de la délivrance du brevet:
**09.04.86 Bulletin 86/15**

(84) Etats contractants désignés:
**AT BE CH DE GB IT LI NL SE**

(73) Titulaire: **INSTITUT FRANCAIS DU PETROLE, 4, Avenue de Bois-Préau, F-92502 Rueil-Malmaison (FR)**

(72) Inventeur: **Rojey, Alexandre, 29-33, rue Henri Régnault, F-92380 Garches (FR)**
Inventeur: **Bonifay, Régis, 21, rue de l'Alma, F-92600 Asnieres (FR)**
Inventeur: **Cariou, Jean-Paul, 15, rue des Cottages, F-78630 Orgeval (FR)**

(56) Documents cités:
**EP - A - 0 064 434**
**DE - A - 1 501 144**
**FR - A - 2 437 588**
**FR - A - 2 444 242**
**FR - A - 2 454 591**
**US - A - 2 182 453**
**US - A - 2 248 178**
**US - A - 2 283 213**
**US - A - 3 483 710**
**US - A - 4 085 596**
**US - A - 4 337 625**

## Description

Les procédés de production de froid et/ou de chaleur par cycle à absorption mettent en jeu un fluide de travail (F) et un solvant (S). Le fluide de travail (F) est successivement condensé en produisant de la chaleur, détendu, vaporisé en prélevant de la chaleur à un fluide extérieur, absorbé puis désorbé à pression plus élevée.

Pour améliorer les performances d'un tel cycle, il a été montré (Demande de brevet EP—A—0.064.434) qu'il est avantageux de mettre en oeuvre un fluide auxiliaire (H) qui est vaporisé au cours de l'étape d'évaporation de fluide (F) puis condensé au cours de l'étape d'absorption du fluide (F) dans le solvant (S). Le fluide (H) étant au moins partiellement immiscible avec la solution du fluide (F) dans le solvant (S) est séparé de la solution riche de (F) dans (S) obtenue à la sortie de l'étape d'absorption et recyclé à l'étape d'évaporation.

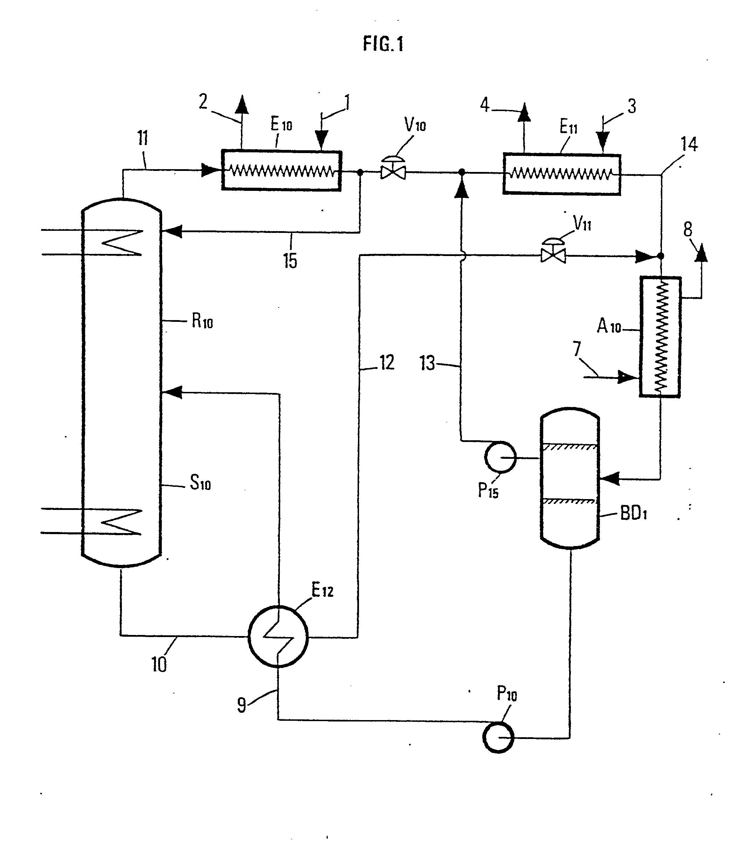

Un tel procédé est schématisé sur la figure 1. Le fluide (F) sort en phase vapeur de la zone de rectification R10 par le conduit 11 puis est condensé dans le condenseur E10 refroidi par le circuit 1—2. Une fraction de la phase liquide obtenue est envoyée par le conduit 15 à la zone de rectification et la fraction restante est détendue à travers la vanne de détente V10 et mélangée à la phase liquide formée par le fluide (H) arrivant par le conduit 13. Le mélange des fluides (F) et (H) est vaporisé dans l'échangeur E11 en prenant de la chaleur à un fluide extérieur (lignes 3—4) et la phase vapeur ainsi formée est envoyée par le conduit 14 vers la zone d'absorption A10 et mélangée avec la solution pauvre arrivant par le conduit 12, après détente à travers la vanne de détente V11.

Au cours de l'absorption du fluide (F) et de la condensation du fluide (H) dans la zone d'absorption A10, la chaleur d'absorption ainsi que la chaleur de condensation sont évacuées par un fluide extérieur (circuit 7, 8). A la sortie de la zone d'absorption, les deux phases liquides qui sont constituées, d'une part, par une solution du fluide (F) dans le solvant (S) et, d'autre part, par le fluide (H), sont séparées dans le bac de décantation BD1. La solution du fluide (F) dans le solvent (S) obtenue à la sortie du bac de décantation BD1 est envoyée vers la colonne de désorption, qui comprend la zone de rectification R10 et la zone d'épuisement S10, par la pompe P10, la ligne 9 et l'échangeur E12 dans lequel elle est chauffée par échange de chaleur avec la solution pauvre provenant de la colonne de désorption (ligne 10). En fond de colonne de désorption la solution provenant de l'étape d'absorption est chauffée en produisant une phase vapeur qui est envoyée dans la zone de rectification R10 dans laquelle on sépare de la phase vapeur la majeure partie du solvant (S) entraîné dans la phase vapeur, cette rectification n'étant pas nécessaire lorsqu'il n'y a pas d'entraînement notable de solvant. La phase liquide formée par le fluide (H) est prélevée par la pompe P15 et recyclée à l'entrée de l'évaporateur E11 par la ligne 13.

Le choix du fluide (H) est très important et conditionne le facteur de gain défini par le rapport $(F_1 + F_2)/F_1$, $F_1$ désignant la chaleur de vaporisation du fluide (F) et $F_2$ la chaleur de vaporisation du fluide (H) mises en jeu dans l'évaporateur E11.

Ce facteur de gain augmente avec la proportion de fluide (H) vaporisé dans l'évaorateur E11 et il a été montré dans la demande de brevet précitée qu'il est avantageux de mettre en oeuvre un fluide (H) relativement volatil, la volatilité du fluide (H) restant limitée par la nécessité de pouvoir condenser le fluide (H) au cours de l'étape d'absorption de (F) dans (S).

Il a été découvert et c'est là l'objet de la présente invention qu'il est possible d'améliorer les performances d'un cycle à absorption mettant en oeuvre un fluide de travail (F), un solvant (S) et un fluide auxiliaire (H) qui se vaporise au moins en partie au cours de l'étape d'absorption du fluide (F) dans le solvant (S), en réalisant l'absorption de (F) dans (S) en au moins deux étapes.

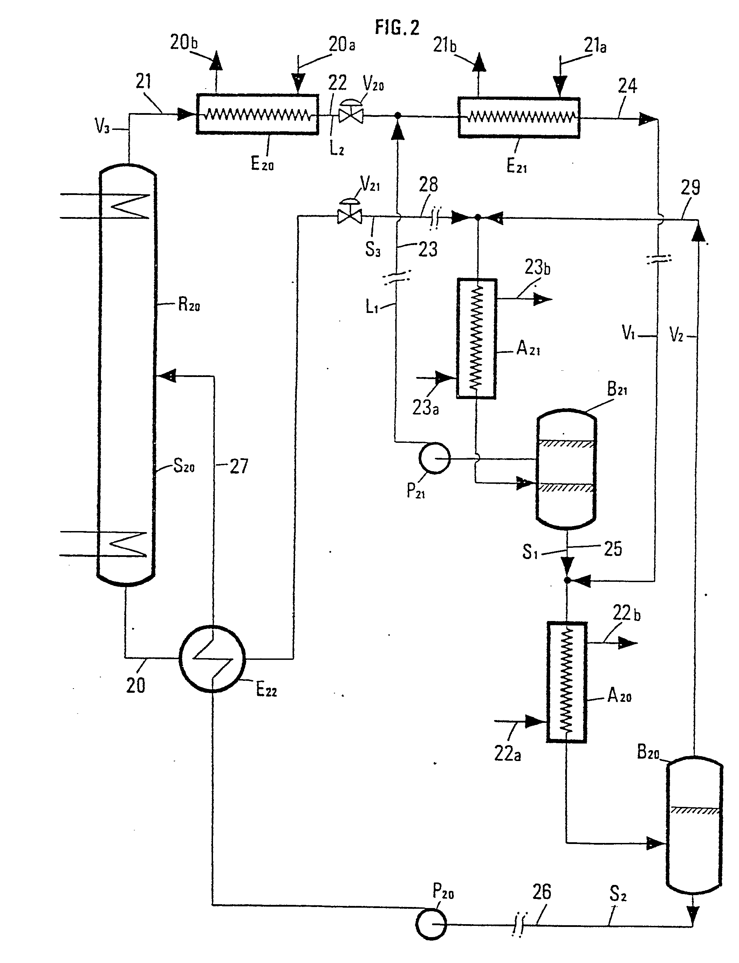

La mise en oeuvre de ces deux étapes d'absorption est illustrée par la Figure 2.

Le fluide de travail (F) sort en phase vapeur de la zone de rectification R20 par le conduit 21. Il est condensé dans l'échangeur E20 (refroidi par un fluide circulant dans les conduits 20a et 20b) d'où il ressort par le conduit 22. Il est alors détendu à travers la vanne de détente V20 et mélangé avec le fluide auxiliare (H) qui arrive en phase liquide par le conduit 23. Le mélange de (F) et (H) est vaporisé dans l'échangeur E21 (en prenant de la chaleur à bas niveau sur le fluide 21a—21b) d'où il ressort en phase vapeur par le conduit 24. Cette phase vapeur est contactée avec la solution de (F) dans (S) arrivant par le conduit 25. Le fluide (F) provenant de l'évaporateur E21 est partiellement absorbé dans l'absorbeur A20, refroidi par un fluide circulant par les conduits 22a—22b: le mélange liquide vapeur sortant de l'absorbeur A20 est séparé dans le bac B20. La phase liquide formée par la solution de (F) dans (S) ainsi obtenue est évacuée par le conduit 26 et reprise par la pompe P20 qui l'envoie par l'échangeur E22 et le conduit 27 à la colonne de désorption qui comprend la zone de rectification R20 et la zone d'épuisement S20. La solution est chauffée en fond de colonne, ce qui premet de générer une phase vapeur riche en (F) et une solution pauvre de (F) dans (S) qui est évacuée par le conduit 20 et passe à travers l'échangeur E22 d'où elle ressort par le conduit 28 comportant un détendeur V21.

La phase vapeur sortant de l'absorbeur A20, comprenant le fluide (H) et le fluide (F) non absorbé est séparée dans le bac B20 d'où elle ressort par le conduit 29. Elle est mélangée à la sortie du conduit 29 avec la solution pauvre arrivant par le conduit 28 et le mélange liquide vapeur ainsi obtenu est envoyé à un second absorbeur A21 refroidi par un fluide circulant par les conduits 23a—23b. Dans cet absorbeur le fluide (H) est condensé et le fluide (F) est absorbé. On obtient ainsi deux phases liquides qui sont séparées dans le bac B21. La solution de (F) dans (S) est envoyée par le conduit 25 à l'entrée du premier absorbeur A20 et la phase liquide formée par le fluide (H) est envoyée par la pompe P21 et le conduit 23 à l'entrée de l'évaporateur E21.

En définitive, le procédé est caractérisé en ce que:

(a) on met en contact, dans une première étape d'absorption, une phase vapeur $(V_1)$ comprenant un fluide de travail F et un fluide auxiliaire H avec une solution $(S_1)$ du fluide de travail F dans un solvant S provenant de l'etape (c) dans des conditions opératoires assurant une absorption du fluide de travail F et une condensation nulle ou partielle du fluide auxiliaire H, et on cède de la chaleur à un fluide extérieur de manière à obtenir une solution $(S_2)$ du fluide de travail F dans le solvant S enrichie en fluide de travail F et une phase vapeur $(V_2)$ comprenant le fluide de travail F non absorbé et le fluide auxiliaire H non condensé et on sépare ladite solution $(S_2)$ de ladite phase vapeur $(V_2)$, le fluide auxiliaire H étant au moins en partie immiscible avec le solvant S et avec la solution du fluide de travail F dans le solvant S,

(b) on met en contact, au cours d'une deuxième étape d'absorption, la phase vapeur $(V_2)$ provenant de l'étape (a) avec une solution relativement pauvre $(S_3)$ du fluide de travail F dans le solvant S en absorbant le fluide de travail F et en condensant le fluide auxiliaire H contenus dans la phase vapeur, on transmet la chaleur d'absorption et la chaleur de condensation à un fluide extérieur et l'on recueille un mélange d'une phase liquide $(L_1)$ de fluide auxiliaire H et de la solution $(S_1)$ du fluide de travail F dans le solvant S,

(c) on sépare la solution $(S_1)$ du fluide de travail F dans le solvant S de la phase liquide $(L_1)$ du fluide auxiliaire H, provenant de l'étape (b), et on envoie ladite solution $(S_1)$ du fluide de travail F dans le solvant S à l'étape (a),

(d) on envoie au moins une fraction de la solution $(S_2)$ du fluide de travail F dans le solvant S, provenant de l'étape (a), à une étape de désorption, on soumet ladite solution à des conditions de désorption, et l'on fournit la chaleur de désorption en la prélevant sur un fluide extérieur, de manière à obtenir une phase vapeur $(V_3)$ riche en fluide de travail F et une solution $(S_3)$ appauvrie en fluide de travail F, on sépare la phase vapeur $(V_3)$ de la solution $(S_3)$ et on recycle ladite solution $(S_3)$ à la deuxième étape d'absorption (b),

(e) on condense une partie au moins de la phase vapeur $(V_3)$ riche en fluide de travail f, provenant de l'étape de désorption (d), en fournissant de la chaleur à un fluide extérieur pour former une phase liquide de condensation $(L_2)$,

(f) on mélange au moins une partie de la phase liquide de condensation $(L_2)$ obtenue à l'étape (e) avec la phase liquide $(L_1)$ du fluide auxiliaire H provenant de l'étape (c) et on vaporise une partie au moins du mélange ainsi obtenu en prélevant de la chaleur sur un fluide extérieur, les conditions opératoires étant choisies de manière à permettre la vaporisation d'une partie au moins du fluide de travail F et d'une partie au moins du fluide auxiliaire H et à obtenir ainsi la phase vapeur $(V_1)$, et

(g) on recycle la phase vapeur $(V_1)$ ainsi obtenue à l'étape (a).

Ce procédé permet de condenser le fluide (H) en présence d'une pression partielle du fluide (F) relativement faible, la concentration du fluide (F) dans le solvant (S) étant plus faible à l'issue de l'étape (b) qu'à l'issue de l'étape (a). Ceci a comme avantage de permettre l'utilisation d'un fluide (H) plus volatil et donc d'augmenter la proportion de fluide (H) au cours de l'étape d'évaporation (f). D'autre part, la concentration en fluide (F) dans le solvant (S) qui est obtenue à l'issue de l'étape (a) est plus élevée, ce qui permet de réduire le taux de recirculation, de réduire le taux de reflux si la phase vapeur produite au cours de l'étape de désorption est rectifiée et ainsi également d'améliorer les performances du cycle.

Différents fluides (F) (S) et (H) peuvent être utilisés. Ainsi le fluide (F) peut être l'ammoniac, le solvant (S) l'eau et le fluide (H) un hydrocarbure tel que le propane, le butane ou le pentane.

Dans un autre cas le fluide (F) peut être de l'eau, le solvant (S) une solution de bromure de lithium et le fluide auxiliaire (H) un hydrocarbure tel que l'heptane.

Pour un couple de fluides (F) et (S) donné, le choix du fluide (H) dépend de l'écart de température entre l'entrée de l'évaporateur et la sortie de l'absorbeur dans lequel est réalisée la deuxième étape d'absorption (b), le fluide (H) étant choisi de manière que sa variation de tension de vapeur entre ces deux températures soit voisine de la tension de vapeur du fluide (F) à l'entrée de l'évaporateur, tout en restant inférieure.

Lorsque le fluide (F) est constitué par de l'ammoniac, l'eau étant le solvant, ou par de l'eau, le solvant (S) étant formé par une solution de bromure de lithium, le fluide (H) peut être un hydrocarbure, par exemple un hydrocarbure paraffinique dont le nombre d'atomes de carbone est généralement compris entre 3 et 8 ou un hydrocarbure halogéné tel que par exemple le difluorochlorométhane R22, le difluorodichlorométhane R12 ou le pentafluorochlorométhane R115. Si l'eau est le fluide de travail (F) et une solution de bromure de lithium le solvant (S), le fluide auxiliare (H) peut être dans certains cas un alcool tel que le méthanol ou l'éthanol ou une cétone telle que l'acétone.

Le procédé selon l'invention s'applique également au cas où le fluide (F) est un fluide autre que l'eau ou l'ammoniac, comme par exemple un fluide organique tel qu'un hydrocarbure ou un hydrocarbure halogéné.

Le solvant (S) peut être dans ce cas un solvant organique tel que la dimethylformamide, le dimethylsulfoxyde, la N-methylpyrrolidone, le tétraethylène glycol, l'alcool benzylique ou encore un hydrocarbure. Il peut être également un produit de synthèse utilisé comme lubrifiant tel que par exemple les lubrifiants de faible viscosité. à base d'alkyl phényles ou de polyolefines.

Le fluide (H) est alors choisi de manière à être au moins partiellement immiscible avec la solution sortant de l'étape d'absorption (b).

Le fluide (H) peut être avantageusement constitué dans le procédé selon l'invention par un mélange de constituants tel qu'un mélange d'hydrocarbures ou un mélange de fluides halogénés.

En effet, la volatilité du fluide (H) doit être adaptée aux conditions opératoires et en dosant les proportions des constituants du mélange il est possible d'ajuster exactement la volatilité du mélange utilisé.

Il est avantageux d'utiliser un mélange dont la volatilité est la volatilité maximum compatible avec une condensation complète du mélange à l'issue de la deuxième étape d'absorption (b).

Le débit de fluide (H) est alors choisi de préférence de manière telle que, à l'issue de l'étape d'evaporation (f), la phase vapeur soit saturée en (H).

Lorsque le fluide (H) est constitué par un mélange de plusieurs substances qui ne forment pas d'azéotrope ou qui sont présentes en proportions non-azéotropiques, en général on obtient à l'issue de chacune des deux étapes d'absorption (a) et (b) une phase liquide condensée, les deux phases liquides étant de composition différente.

Si la température à l'issue de l'étape d'absorption (a) et la température à l'issue de l'étape d'absorption (b) sont voisines, la teneur en constituant léger de la phase liquide (H) obtenue à l'issue de l'étape d'absorption (b) est plus élevée que la teneur en constituant léger de la phase liquide (H) obtenue à l'issue de l'étape d'absorption (a).

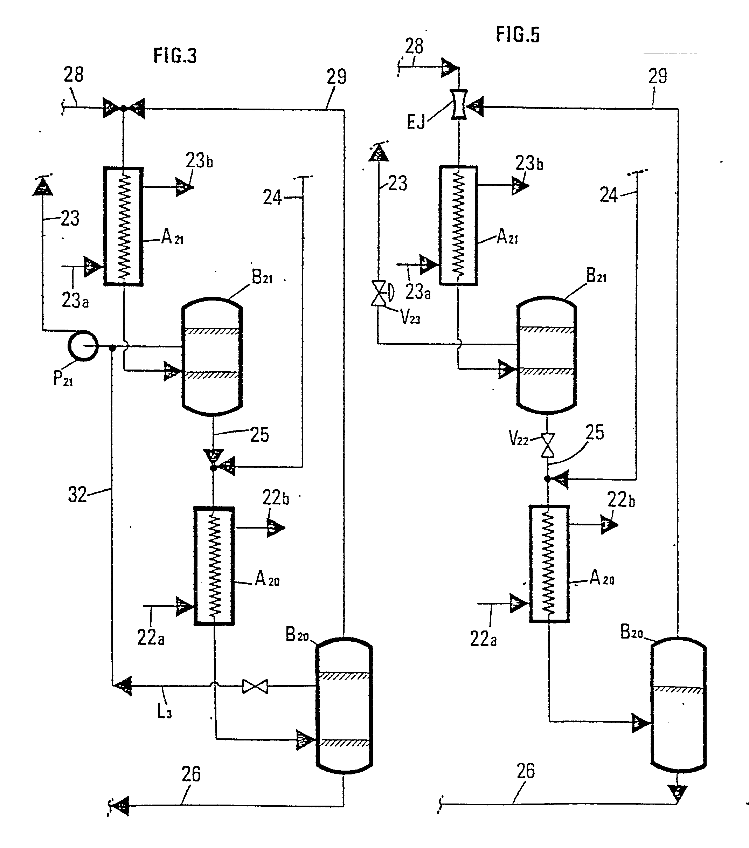

Une telle disposition où l'on recueille une phase liquide (H) à l'issue de chacune des étapes d'absorption (a) et (b) est représentée sur la figure 3 (modification de la figure 2).

Dans ce cas on recueille à la sortie de l'absorbeur A20 dans lequel est réalisé l'étape d'absorption (a) une première phase liquide (H) et à la sortie de l'absorbeur A21 une deuxième phase liquide (H). Ces deux phases sont prélevées par la pompe P21, la phase liquide (H) provenant du bac de recette et de décantation B20 arrivant par le conduit 32.

La régulation du circuit de fluide (H) peut être réalisée par exemple en maintenant, pour des conditions opératoires données, le niveau de phase liquide (H) dans le bac B20. En modifiant la consigne fixant ce niveau on modifie les volumes respectifs de phase liquide (H) contenus dans les bacs B20 et B21, dont les compositions sont différentes; la composition globale étant fixée. Ainsi en abaissant le niveau dans le bac B20, on augmente la proportion en constituant lourd dans le bac B21 et dans le mélange qui circule, et inversement, en élevant ce niveau, on diminue la proportion en constituant lourd dans le bac B21 et dans le mélange qui circule.

On dispose ainsi d'un moyen simple pour modifier la composition du mélange qui circule et l'adapter aux conditions opératoires.

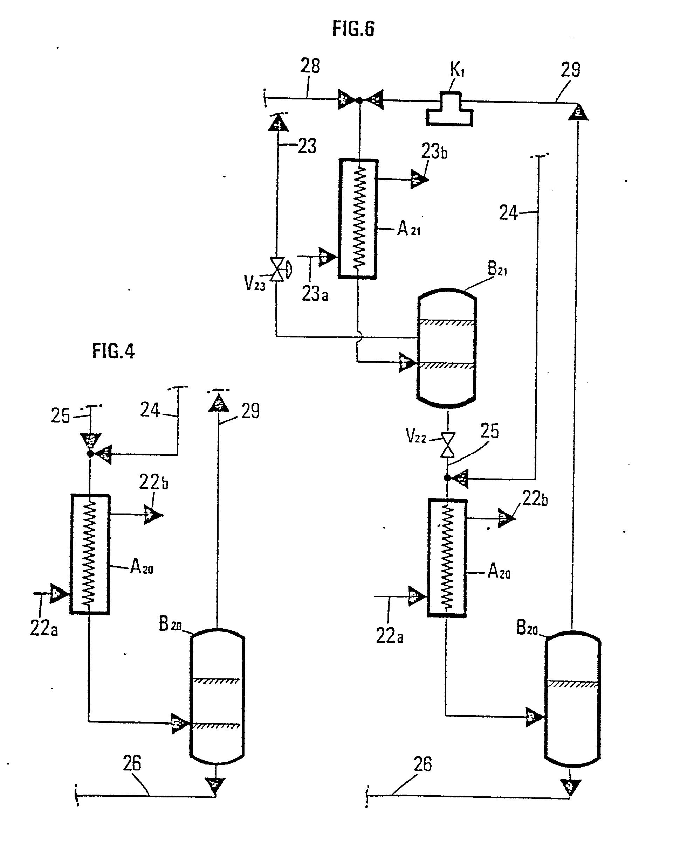

Une autre manière d'opérer consiste à fonctionner selon le schéma représenté sur la figure 4. Dans ce cas la phase liquide (H) recueillie à la sortie de l'absorbeur A20 est stockée dans le bac B20 sans être prélevée par la pompe P21. La figure 4 est une modification de la figure 2.

Dans ce cas, le niveau de phase liquide (H) dans le bac B20 monte jusqu'à ce que la teneur en constituant lourd dans le fluide (H) qui circule à travers la pompe P21 et dans l'évaporateur E21 soit suffisamment faible pour que le débit de phase liquide (H) condensée à la sortie de l'absorbeur A20 devienne nul, ce qui permet un ajustement automatique de la composition du fluide (H) qui circule en fonction des conditions opératoires, en conduisant en particulier à une augmentation de la teneur en constituant léger lorsque l'écart entre la température à l'issue de l'étape d'évaporation et la température à l'issue des étapes d'absorption diminue.

Le procédé selon l'invention est illustré par l'exemple 1.

### Exemple 1

L'exemple 1 est décrit en référence à la figure 3. A l'aide de la pompe P20 on envoie un débit de 1770 kg/h d'une solution aqueuse contenant 30% d'ammoniac en fraction molaire à travers l'échangeur E22 à la colonne de désorption. La colonne de désorption opère à une pression de 18 bar. En fond de colonne on fournit une puissance thermique de 252 KW. La vapeur ammoniacale obtenue en tête de la zone de rectification R20 est condensée dans l'échangeur E20 d'où elle ressort à la température de 45°C en fournissant une puissance thermique de 163 KW à un fluide extérieur. Le condensat obtenue est détendu à travers la vanne V20 et mélangé avec un débit de 949 kg/h d'un mélange formé en composition molaire de 94% de butane et de 6% de pentane. Le mélange ainsi obtenu est envoyé à l'évaporateur E21 dans lequel il se vaporise en prélevant une puissance thermique de 214 Kw sur un fluide extérieur et d'où il ressort à une température de 15°C. L'ammoniac vapeur obtenu est partiellement absorbé dans l'absorbeur A20 tandis que les hydrocarbures en phase vapeur sont partiellement condensés. A la sortie de l'absorbeur A20 on obtient une solution aqueuse d'ammoniac, une deuxième phase liquide formée en composition molaire de 92% de butane et de 8% de pentane qui est prélevée par la pompe P21 à travers la conduite 32, et une phase vapeur qui est envoyée à l'absorbeur A21 dans lequel elle est mise en contact avec la solution provenant de la colonne de désorption qui arrive par le conduit 28. A la sortie de l'absorbeur A21 on obtient une solution aqueuse contenant 15% d'ammoniac qui est envoyée par le conduit 25 à l'absorbeur A20. Dans l'absorbeur A21 une puissance thermique de 231 Kw est produite et transmise à un fluide extérieur.

Il est avantageux d'effectuer la deuxième étape d'absorption (b) à une pression plus élevée que la pression à laquelle est opérée la première étape d'absorption (a). En effet, il est possible dans ce cas de condenser un fluide (H) plus léger que lorsque l'étape d'absorption (b) est menée à une pression voisine de l'étape d'absorption (a), donc d'augmenter la proportion de fluide (H) au cours de l'étape d'évaporation et le facteur de gain.

Dans la disposition représentée sur le schéma de la figure 5, la phase vapeur sortant du bac B20 est contactée avec la solution arrivant par le conduit 28 à travers un éjecteur EJ, ce qui permet d'obtenir dans l'absorbeur A21 un niveau de pression supérieur au niveau de pression qui s'établit dans l'absorbeur A20. Les deux phases liquides obtenues à la sortie de l'absorbeur A21 sont séparées dans le bac B21 puis respectivement détendues à travers les vannes de détente V22 et V23 avant d'être recyclées. La figure 5 est une modification de la figure 2.

Dans la modification représentée sur le schéma de la figure 6, la phase vapeur sortant du bac B20 est comprimée par le compresseur K1 avant d'être contactée avec la solution arrivant par le conduit 28, ce qui permet d'obtenir dans l'absorbeur A21 un niveau de pression supérieur au niveau de pression qui s'établit dans l'absorbeur A20.

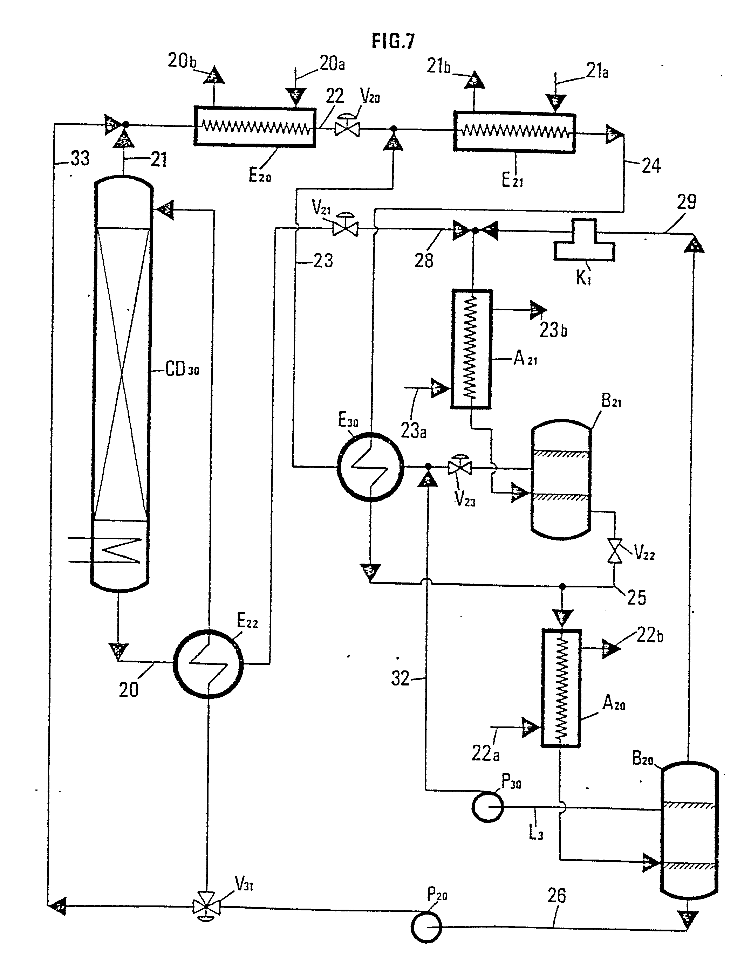

Il est avantageux dans ce cas également d'opérer avec un fluide (H) constitué par un mélange et on peut dans ce cas utiliser par exemple une disposition telle que celle qui est représentée sur la figure 7.

Dans cette disposition on obtient à l'issue de la première étape d'absorption (a) qui est opérée dans l'absorbeur A20 une première phase liquide (H) qui est prélevée par la pompe P30 et envoyée à travers le conduit 32 pour être mélangée avec une deuxième phase liquide (H) qui est recueillie à l'issue de la deuxième étape d'absorption (b) qui est opérée dans l'absorbeur A21.

Une disposition mettant en oeuvre une étape de compression de la phase vapeur obtenue à l'issue de la première étape d'absorption (a) est particulièrement avantageuse lorsque l'on veut obtenir des températures de chauffage relativement élevées. Dans ce cas il se pose le problème de limiter la pression haute du système.

Dans la disposition représentée sur le schéma de la figure 7 la pression haute est limitée en mélangeant la phase vapeur issue de la zone de désorption avec une fraction de la solution riche provenant de l'étape d'absorption (a).

Le principe qui est mis en oeuvre pour limiter la pression est donc le suivant:

la solution riche de (F) dans (S) provenant de la zone d'absorption est scindée en une première fraction qui est envoyée à la zone de désorption dans laquelle, en chauffant la solution, on obtient une solution pauvre qui est envoyée à la zone d'absorption et une phase vapeur qui est mélangée avec une deuxième fraction de la solution riche provenant de la zone d'absorption, le mélange ainsi obtenu étant refroidi ce qui conduit à la formation d'une phase liquide constituée par une solution concentrée de (F) dans (S) qui est détendue et envoyée à la zone d'évaporation.

Dans la disposition représentée sur le schéma de la figure 7 la solution riche est scindée en deux fractions dans la vanne trois voies V31, une première fraction étant envoyée à travers l'échangeur E22 à la colonne de désorption CD30 dans laquelle elle est mise en contact avec la phase vapeur obtenue par chauffage en fond de colonne et une deuxième fraction étant envoyée à travers le conduit 33 pour être mélangée avec la phase vapeur sortant par le conduit 21 de la colonne CD30.

Une telle disposition est illustrée par l'exemple 2.

### Exemple 2

L'exemple 2 est décrit en référence à la figure 7.

A l'aide de la pompe P20 on envoie vers la zone de désorption un débit de 1965 kg/h d'une solution aqueuse contenant 30% d'ammoniac.en fraction molaire. La vanne trois voies V31 permet de scinder en deux ce débit, d'envoyer 195 kg/h par le conduit 33 et 1770 kg/h à travers l'échangeur E22 en tête de la colonne CD30. La vapeur ammoniacale obtenue en tête de la colonne CD30 est mélangée avec la solution arrivant par le conduit 33 et le mélange ainsi obtenu est refroidi dans l'échangeur E20 en formant une solution contenant 78% d'ammoniac en fraction molaire.

La puissance thermique fournie dans l'échangeur E20 est de 157 Kw et permet de chauffer un débit d'eau extérieur de 57 à 65°C. La solution obtenue est détendue à travers la vanne V20 et mélangée avec la phase hydrocarbure liquide arrivant par le conduit 23 et dont la composition molaire est la suivante:

| | |
|---|---|
| Butane normal: | 0,70 |
| Pentane normal: | 0,25 |
| Hexane normal: | 0,05 |

Le mélange ainsi obtenu est envoyé à l'évaporateur E21 dans lequel il se vaporise en prélevant une puissance thermique de 172 Kw à un fluide extérieur qui se refroidit de 45 à 25°C, la température du mélange détendu à l'entrée de l'évaporateur E21 étant de 15°C.

Le mélange passe ensuite dans l'échangeur E30 d'où il ressort à une température de 41°C et il est ensuite mélangé avec la solution ammoniacale provenant du bac B21. L'ammoniac vapeur est partiellement absorbé dans l'absorbeur A20 et à la sortie de l'absorbeur A20 on obtient une solution aqueuse d'ammoniac contenant 30% en fraction molaire d'ammoniac, une phase hydrocarbure qui est reprise par la pompe P30 et une phase vapeur qui est évacuée par le conduit 29. Cette phase vapeur est comprimée dans le surpresseur K1 auquel on fournit une puissance mécanique de 3 Kw ce qui permet de faire passer la phase vapeur des conditions régnant dans le bac B20 dans lequel la pression est de 0,58 MPa aux conditions régnant dans l'absorbeur A21 correspondant à une pression proche de la pression dans le bac B21 qui est de 0,71 MPa.

Le procédé selon l'invention a été décrit selon une disposition mettant en oeuvre deux étapes d'absorption, mais le même principe peut être étendu à une disposition mettant en oeuvre un plus grand nombre d'étapes d'absorption.

En ce qui concerne la nature des appareils et équipements utilisables pour mettre en oeuvre le procédé, on peut se référer à la demande de brevet EP—A—0.064.434.

La température d'évaporation du mélange des fluides (F) et (H) dans l'évaporateur peut se situer par exemple dans une gamme de température allant de −20 à +100°C.

Le température à l'issue des étapes d'absorption (a) et (b) peut se situer par exemple dans une gamme de température allant de +20 à +120°C.

La température de chauffage du générateur de la zone de désorption peut se situer par exemple dans une gamme de température allant de 130 à 250°C.

La pression maximum de fonctionnement du dispositif est en général inférieur à 50 bar.

**Revendications**

1. Procédé de production de froid et/ou de chaleur qui comprend les étapes suivantes:

(a) on met en contact, dans une première étape d'absorption, une phase vapeur $(V_1)$ comprenant un fluide de travail F et un fluide auxiliaire H avec une solution $(S_1)$ du fluide de travail F dans un solvant S provenant de l'étape (c) dans des conditions opératoires assurant une absorption du fluide de travail F et une condensation nulle ou partielle du fluide auxiliaire H, et on cède de la chaleur à un fluide extérieur de manière à obtenir une solution $(S_2)$ du fluide de travail F dans le solvant S enrichie en fluide de travail F et une phase vapeur $(V_2)$ comprenant le fluide de travail F non absorbé et le fluide auxiliaire H non condensé et on sépare ladite solution $(S_2)$ de ladite phase vapeur $(V_2)$, le fluide auxiliaire H étant au moins en partie immiscible avec le solvant S et avec la solution du fluide de travail F dans le solvant S,

(b) on met en contact, au cours d'une deuxième étape d'absorption, la phase vapeur $(V_2)$ provenant de l'étape (a) avec une solution relativement pauvre $(S_3)$ du fluide de travail F dans le solvant S en absorbant le fluide de travail F et en condensant le fluide auxiliaire H contenus dans la phase vapeur, on transmet la chaleur d'absorption et la chaleur de condensation à un fluide extérieur et l'on recueille un mélange d'une phase liquide $(L_1)$ de fluide auxiliaire H et de la solution $(S_1)$ du fluide de travail F dans le solvant S,

(c) on sépare la solution $(S_1)$ du fluide de travail F dans le solvant S de la phase liquide $(L_1)$ du fluide auxiliaire H, provenant de l'étape (b), et on envoie ladite solution $(S_1)$ du fluide de travail F dans le solvant S à l'étape (a),

(d) on envoie au moins une fraction de la solution $(S_2)$ du fluide de travail F dans le solvant S, provenant de l'étape (a), à une étape de désorption, on soumet ladite solution à des conditions de désorption, et l'on fournit la chaleur de désorption en la prélevant sur un fluide extérieur, de manière à obtenir une phase vapeur $(V_3)$ riche en fluide de travail F et une solution $(S_3)$ appauvrie en fluide de travail F, on sépare la phase vapeur $(V_3)$ de la solution $(S_3)$ et on recycle ladite solution $(S_3)$ à la deuxième étape d'absorption (b),

(e) on condense une partie au moins de la phase vapeur $(V_3)$ riche en fluide de travail F, provenant de l'étape de désorption (d), en fournissant de la chaleur à un fluide extérieur pour former une phase liquide de condensation $(L_2)$,

(f) on mélange au moins une partie de la phase liquide de condensation $(L_2)$ obtenue à l'étape (e) avec la phase liquide $(L_1)$ du fluide auxiliaire H provenant de l'étape (c) et on vaporise une partie au moins du mélange ainsi obtenu en prélevant de la chaleur sur un fluide extérieur, les conditions opératoires étant choisies de manière à permettre la vaporisation d'une partie au moins du fluide de travail F et d'une partie au moins du fluide auxiliaire H et à obtenir ainsi la phase vapeur $(V_1)$, et

(g) on recycle la phase vapeur $(V_1)$ ainsi obtenue à l'étape (a).

2. Procédé selon la revendication 1 dans lequel le fluide auxiliaire H est constitué par un mélange de deux ou davantage, substances ne formant pas d'azéotrope ou présentes en proportions non-azéotropiques.

3. Procédé selon l'une des revendications 1 et 2 dans lequel le fluide de travail F est l'ammoniac, le solvant S est l'eau et le fluide auxiliare H est un hydrocarbure ou un hydrocarbure halogéné.

4. Procédé selon l'une des revendications 1 à 3 dans lequel on choisit les conditions opératoires de l'étape (a) de manière à effectuer une condensation partielle du fluide auxiliaire H et à obtenir une phase liquide $(L_3)$ de fluide auxiliaire H en plus de la solution $(S_2)$ et de la phase vapeur $(V_2)$, on sépare la phase liquide $(L_3)$ de la solution $(S_2)$ et de la phase vapeur $(V_2)$, on envoie la phase liquide $(L_3)$ à l'étape (f) et on la vaporise en mélange avec la phase liquide $(L_2)$ et la phase liquide $(L_1)$.

5. Procédé selon la revendication 4 dans lequel on ajuste la composition du fluide auxiliaire H circulant au cours de l'étape (f) en faisant varier les niveaux relatifs des phases liquides $(L_2$ et $L_3)$ contenues dans les volumes de recette placés à la sortie des étapes (a) et (b).

6. Procédé selon la revendication 4 dans lequel la composition du fluide auxiliaire H est ajustée par variation du niveau de phase liquide $(L_3)$ dans le volume de recette placé à la sortie de l'étape (a), le débit de phase liquide $(L_3)$ prélevé à la sortie de l'étape (a) étant nul.

7. Procédé selon l'une des revendications 1 à 6 dans lequel l'étape (b) est opérée à une pression plus élevée que l'étape (a), la phase vapeur $(V_2)$ issue de l'étape (a) étant envoyée à l'étape (b), par un moyen de compression.

8. Procédé selon l'une des revendications 1 à 7 dans lequel la solution $(S_2)$ obtenue à l'étape (a) est scindée en deux fractions, une première fraction étant envoyée à l'étape de désorption (d), la fraction restante étant mélangée à la phase va-

peur (V$_3$) obtenue à l'étape (d), le mélange liquide-vapeur ainsi obtenu étant refoidi en cédant de la chaleur à un fluide extérieur de manière à obtenir la phase liquide de condensation.

## Patentansprüche

1. Verfahren zur Erzeugung von Kälte und/oder Wärme, das die folgenden Stufen umfaßt:

a) man bringt in einer ersten Absorptionsstufe eine Dampfphase (V$_1$), umfassend ein Arbeitsfluid F und ein Hilfsfluid H mit einer Lösung (S$_1$) des Arbeitsfluids F in einem Lösungsmittel S, herrührend aus Stufe (c), in Kontakt bei Betriebsbedingungen, die eine Absorption von Arbeitsfluid F und keine oder partielle Kondensation des Hilfsfluids H sicherstellt, und man überläßt Wärme einem äußeren Fluid in der Weise, daß man eine Lösung (S$_2$) des Arbeitsfluids F im Lösungsmittel S erhält, angereichert mit Arbeitsfluid F, und eine Dampfphase (V$_2$), die das nicht absorbierte Arbeitsfluid F und das nicht kondensierte Hilfsfluid H enthält, und man trennt die genannte Lösung (S$_2$) von genannter Dampfphase (V$_2$), wobei das Hilfsfluid H wenigstens zum Teil nicht unmischbar ist mit dem Lösungsmittel S und mit der Lösung des Arbeitsfluids F in Lösungsmittel S,

b) man bringt im Laufe einer zweiten Absorptionsstufe die aus Stufe (a) herrührende Dampfphase (V$_2$) in Kontakt mit einer relativ armen Lösung (S$_3$) des Arbeitsfluids F in Lösungsmittel S, wobei man das in der Dampfphase enthaltene Arbeitsfluid F absorbiert und das Hilfsfluid H kondensiert, man überträgt die Absorptionswärme und die Kondensationswärme auf ein äußeres Fluid und man erhält eine Mischung einer flüssigen Phase (L$_1$) von Hilfs-Fluid H und der Lösung (S$_1$) des Arbeitsfluides F im Lösungsmittel S

c) man trennt die Lösung (S$_1$) des Arbeitsfluides F im Lösungsmittel S der flüssigen Phase (L$_1$) des Hilfs-Fluids H, herrührend aus Stufe (b), und man schickt die genannte Lösung (S$_1$) des Arbeitsfluides F im Lösungsmittel S zur Stufe (a),

d) man schickt wenigstens einen Teil der Lösung (S$_2$) des Arbeitsfluides F im Lösungsmittel S, herrührend aus Stufe (a), zu einer Desorptionsstufe, man unterwirft die genannte Lösung Desorptionsbedingungen, und man liefert die Desorptionswärme, indem man sie entnimmt auf ein äußeres Fluid, in der Weise, daß man eine Dampfphase (V$_3$), reich an Arbeitsfluid F erhält, und eine Lösung (S$_3$), verarmt an Arbeitsfluid F, man trennt die Dampfphase (V$_3$) von der Lösung (S$_3$) und man rezyklisiert die genannte Lösung (S$_3$) zur zweiten Absorptionsstufe (b),

e) man kondensiert wenigstens einen Teil der Dampfphase (V$_3$), reich an Arbeitsfluid F, herrührend aus der Desorptionsstufe (d), wobei man die Wärme liefert an ein äußeres Fluid zur Bildung einer flüssigen Kondensationsphase (L$_2$),

f) man mischt wenigstens einen Teil der flüssigen Kondensationsphase (L$_2$), erhalten in Stufe (e), mit der flüssigen Phase (L$_1$) des Hilfs-Fluides

H, herrührend von Stufe (c), und man verdampft wenigstens einen Teil des so erhaltenen Gemisches, wobei man Wärme entnimmt auf ein äußeres Fluid, wobei die Betriebsbedingungen derart gewählt werden, um die Verdampfung wenigstens eines Teiles des Arbeitsfluides F und wenigstens eines Teils des Hilfs-Fluids H zu erlauben und um so die Dampfphase (V$_1$) zu erhalten, und

g) man rezyklisiert die so erhaltene Dampfphase (V$_1$) zur Stufe (a).

2. Verfahren gemäß Anspruch 1, in dem das Hilfs-Fluid (H) besteht aus zwei oder mehr Substanzen, die kein Azeotrop bilden oder in nichtazeotropischen Anteilen vorhanden sind.

3. Verfahren gemäß einem der Ansprüche 1 und 2, in dem das Arbeitsfluid F Ammoniak ist, das Lösungsmittel S Wasser ist und das Hilfsfluid H ein Kohlenwasserstoff oder ein halogenierter Kohlenwasserstoff ist.

4. Verfahren gemäß einem der Ansprüche 1 bis 3, in dem man die Betriebsbedingungen der Stufe (a) in der Weise wählt, um eine partielle Kondensation des Hilfsfluides H zu bewirken und um eine flüssige Phase (L$_3$) des Hilfs-Fluides H zu erhalten noch dazu zu Lösung (S$_2$) und zu der Dampfphase (V$_2$), man trennt die flüssige Phase (L$_3$) von der Lösung (S$_2$) und der Dampfphase (V$_2$), man schickt die flüssige Phase (L$_3$) zur Stufe (f) und man verdampft sie in Mischung mit der flüssigen Phase (L$_2$) und der flüssigen Phase (L$_1$).

5. Verfahren gemäß Anspruch 4, in dem man die Zusammensetzung des im Verlauf von Stufe (f) zirkulierenden Hilfsfluides (H) anpaßt, indem man die relativen Pegel der flüssigen Phasen (L$_2$ und L$_3$), enthalten in den Einnahmevolumina, angebracht am Ausgang der Stufen (a) und (b), variieren läßt.

6. Verfahren gemäß Anspruch 4, in dem die Zusammensetzung des Hilfsfluids H angepaßt wird durch Variation des Pegels der flüssigen Phase (L$_3$) im Einnahmevolumen, angebracht am Ausgang von Stufe (a), wobei der Ausstrom der am Ausgang der Stufe (a) entnommenen flüssigen Phase (L$_3$) Null ist.

7. Verfahren gemäß einem der Ansprüche 1 bis 6, in dem die Stufe (b) betrieben wird bei einem höheren Druck als Stufe (a), wobei die von Stufe (a) ausgehende Dampfphase (V$_2$) zur Stufe (b) geschickt wird, durch ein Kompressionsmittel.

8. Verfahren gemäß einem der Ansprüche 1 bis 7, in dem die in Stufe (a) erhaltene Lösung (S$_2$) in zwei Fraktionen gespalten wird, wobei eine erste Fraktion zur Desorptionsstufe (d) geschickt wird, wobei die verbleibende Fraktion mit der in Stufe (d) erhaltenen Dampfphase (V$_3$) gemischt ist, wobei die so erhaltene Flüssigkeit-Dampf-Mischung gekühlt wird, indem man die Wärme entnimmt auf ein äußeres Fluid in der Weise, um die flüssige Kondensationsphase zu erhalten.

## Claims

1. A process for producing cold and/or heat, comprising the following steps:

(a) contacting, in a first absorption step, a vapor phase ($V_1$) comprising a working fluid F and an auxiliary fluid H with a solution ($S_1$) of the working fluid F in a solvent S discharged from step (c), under operating conditions providing for absorption of the working fluid F and no condensation or partial condensation of the auxiliary fluid H, transferring heat to an external fluid so as to obtain a solution ($S_2$) of the working fluid F in solvent S of increased working fluid F content and a vapor phase ($V_2$) comprising unabsorbed working fluid F and uncondensed auxiliary fluid H, and separating said solution ($S_2$) from said vapor phase ($V_2$), said auxiliary fluid H being at least partly immiscible with solvent S, and with the solutions of the working fluid F in solvent S,

(b) contacting, in a second absorption step, the vapor phase ($V_2$) issued from step (a) with a relatively lean solution ($S_3$) of the working fluid F in solvent S to absorb the working fluid F and condense the auxiliary fluid H contained in the vapor phase, transmitting the absorption heat and the condensation heat to an external fluid and recovering a mixture of liquid phase ($L_1$) of auxiliary fluid H with the solution ($S_1$) of the working fluid F in solvent S,

(c) separating the solution ($S_1$) of the working fluid F in solvent S from the liquid phase ($L_1$) of auxiliary fluid H issued from step (b) and feeding said solution ($S_1$) of the working fluid F in solvent S to step (a),

(d) supplying at least a fraction of solution ($S_2$) of the working fluid F in solvent S issued from step (a) to a desorption step, subjecting said solution to desorption conditions and supplying the desorption heat from an external fluid, so as to obtain a vapor phase ($V_3$) of high working fluid F content and a solution ($S_3$) of low working fluid F content, separating the vapor phase ($V_3$) from solution ($S_3$) and recycling said solution ($S_3$) to the second absorption step (b),

(e) condensing at least a portion of the vapor phase ($V_3$) of high working fluid F content, issued from desorption step (d), while supplying heat to an external fluid to form a condensation liquid phase ($L_2$),

(f) admixing at least a portion of the condensation liquid phase ($L_2$) obtained in step (e) with the liquid phase ($L_1$) of the auxiliary fluid H issued from step (c) and vaporizing at least a portion of the resultant mixture by taking heat from an external fluid, the operating conditions being so selected as to provide for the vaporization of at least a portion of the working fluid F and at least a portion of the auxiliary fluid H, thus obtaining the vapor phase ($V_1$), and

(g) recycling the resultant vapor phase ($V_1$) to step (a).

2. A process according to claim 1, wherein the auxiliary fluid H consists of a mixture of two or more substances not forming an azeotrope or used in non-azeotropic proportions.

3. A process according to one of claims 1 and 2, wherein working fluid F is ammonia, solvent S is water and auxiliary fluid H is a hydrocarbon or a halogenated hydrocarbon.

4. A process according to one of claims 1 to 3, wherein the operating conditions of step (a) are so selected as to effect a partial condensation of the auxiliary fluid H and obtain a liquid phase ($L_3$) of the auxiliary fluid H in addition to the solution ($S_2$) and the vapor phase ($V_2$); the liquid phase ($L_3$) is separated from the solution ($S_2$) and from the vapor phase ($V_2$), the liquid phase ($L_3$) is fed to step (f) and vaporized in admixture with the liquid phase ($L_2$) and the liquid phase ($L_1$).

5. A process according to claim 4, wherein the composition of the auxiliary fluid H circulating during step (f) is adjusted by varying the relative levels of the liquid phases ($L_2$ and $L_3$) at the output of steps (a) and (b).

6. A process according to claim 4, wherein the composition of the auxiliary fluid H is adjusted by varying the level of the liquid phase ($L_3$) at the output of step (a), the flow rate of liquid phase ($L_3$) at the output of step (a) being null.

7. A process according to one of claims 1 to 6 wherein step (b) is operated at a higher pressure than step (a), the vapor phase ($V_2$) issued from step (a) being supplied to step (b) through compression means.

8. A process according to one of claims 1 to 7, wherein solution ($S_2$) obtained in step (a) is divided into two fractions, a first fraction being fed to desorption step (d), the remaining fraction being admixed with the vapor phase ($V_3$) obtained in step (d), the resultant liquid-vapor mixture being cooled by transferring heat to an external fluid so as to obtain the condensation liquid phase.

FIG.1

FIG.2

FIG.3

FIG.5

5

## FIG.6

## FIG.4

## FIG.7